# EUROPEAN PATENT APPLICATION

(11) **EP 1 333 392 A1**
(43) Date of publication of application: **06.08.2003**
(21) Application number: 01904573.1
(22) Date of filing: 20.02.2001
(51) Int. Cl.: G06F 17/60, G07F 17/40

(54) **METHOD FOR SELLING MERCHANDISE AND METHOD FOR PURCHASING MERCHANDISE**

(30) Priority: 10.11.2000 JP 2000344084
(71) Applicant: Best Medical Service Kabushiki Gaisha, Saitama-shi, Saitama 330-0802 (JP)
(72) Inventor: SHINBO, Koichiro, c/o BEST MED. SERVICE K. GAISHA, Saitama-shi, Saitama 330-0802 (JP)
(74) Representative: Möbus, Steffen, Dipl.-Ing.
(86) International application number: JP0101211
(87) International publication number: WO02039334

(57) **Abstract**

A method for selling merchandise according to working example 1 mainly uses the Internet (100), merchandise sale supporting means (eyeglasses sale supporting means) (10) managed by an eyeglasses seller (merchandise seller), and merchandise purchase supporting means (311, 312,..., 31n) managed by eyeglasses shop (merchandise shops). Bidding data about desired merchandise purchase prices and sale supporting services is received from registered merchandise shops. Therefore the benefits of the selling and purchase sides are ensured, and efficient service support and selling price setting for each of merchandise shops of different scales are made, thus providing a technique relating to a merchandise selling method and merchandise purchase method by which prices are easily adjusted.

## Description

### BACKGROUND OF THE INVENTION

### Field of the Invention:

This invention relates to a method of selling merchandise, and more particularly to a method of selling merchandise and a method of purchasing merchandise using the Internet and a bidding method.

### Description of the Related Art:

Conventionally, at shops that sell eyeglasses and contact lenses, each shop bought various kinds of merchandise individually from the manufacturer or supplier, and sold that merchandise.

At large-scale shops, a management method has been used of selling large quantities of merchandise at low prices with small profit margins. On the other hand, at small-scale shops, a management method has been used of selling merchandise tailored to the needs of the user, and providing other services in addition to selling merchandise.

However, there were the following problems in the prior art.

There were problems in that by setting uniform sales prices, it was not possible to have purchase prices that would maintain profit margins for all shops of various sizes, and setting sales prices individually for shops of various sizes required much work.

Taking the above problems into consideration, it is the object of this invention to provide a method for selling merchandise and a method for purchasing merchandise where bidding data related to purchase prices for desired merchandise and sales-support services are received from a plurality of pre-registered merchandise shops over the Internet, whereby it is possible to perform efficient service support and set sales prices that maintain profit for both the buyer and seller.

### SUMMARY OF THE INVENTION

The invention according to claim 1 is a method of selling merchandise using bidding and comprising: a first step in which a merchandise-sales-support means, which is operated by a merchandise seller who performs distribution, receives bidding data via a network, such as the Internet, from a merchandise-purchasing-support means, which is operated by a pre-registered merchandise shop, for a desired merchandise purchase price; and a second step of making a merchandise sales contract with a merchandise shop when the desired merchandise purchase price is greater than a preset and confidential minimum allowable merchandise sales price.

The invention according to claim 2 is the method of selling merchandise of claim 1 in which the second step comprises a step of determining whether or not the desired merchandise purchase prices from the merchandise shops, which are pre-registered for a plurality of groups, are greater than the minimum allowable merchandise sales price, which is preset for each group; and making a merchandise sales contract with a merchandise shop, which sent a desired merchandise purchase price that is greater than the minimum allowable merchandise sales price.

The invention according to claim 3 is the method of selling merchandise of claim 1 or 2 in which the second step comprises a step of setting in advance a minimum allowable merchandise sales price for each of the merchandise shops, which are registered in the respective groups, based on factors that affect the price setting, such as seasonal changes, merchandise shipping destination that corresponds to the merchandise shop, number of orders, currency exchange rate, delivery date, etc.

The invention according to claim 4 is the method of selling merchandise of any of the claims 1 to 3 in which the first step comprises a third step of limiting the number of times a desired merchandise purchase price can be received from the same merchandise shop as bidding data that has a deadline after a specified period of time.

The invention according to claim 5 is the method of selling merchandise of any of the claims 1 to 4 in which the second step comprises a step of making public in advance a confidential minimum allowable merchandise sales price according to the factors that affect price setting and conditions of supply and demand.

The invention according to claim 6 is the method of selling merchandise of any of the claims 1 to 5 in which the first step comprises a step of receiving a maximum amount or minimum amount of merchandise for a desired merchandise purchase price.

The invention according to claim 7 is the method of selling merchandise of any of the claims 1 to 6 in which the merchandise-sales-support means monitors which merchandise is selling well by: lending a POS, which uses 2-dimensional barcodes, to a merchandise shop, with which a merchandise sales contract has been made, or a general merchandise shop, receiving merchandise inventory data from the merchandise shop that uses that POS, and managing the merchandise inventory at the merchandise shop.

The invention according to claim 8 is a method of selling merchandise of any of the claims 1 to 7 in which the merchandise-sales-support means receives data related to the user, which includes measurement results such as vision or body type and conditions of use such as how the merchandise will be used by the user, via a network, such as the Internet, from the merchandise-sales means installed at the merchandise shop with which said merchandise sales contract has been made, or general merchandise shop; selects the most suitable merchandise based on the user data from a database related to registered merchandise; selects the most suitable merchandise supplier from among merchandise suppliers, including pre-registered merchandise manufacturers; and sends the most suitable merchandise data from the merchandise-sales-support means to the merchandise-manufacturing means or terminal of the selected merchandise supplier over the network, and gives an instruction to supply the merchandise.

The invention according to claim 9 is the method of selling merchandise of any of the claims 1 to 8 that receives questions related to the merchandise from the user when the merchandise-sales-support means receives user data, and sends answers to questions and advice to the user over the network.

The invention according to claim 10 is the method of selling merchandise of any of the claims 1 to 9 that when giving an instruction to supply the merchandise; sends data, which is related to the merchandise, and an estimate request to the merchandise-manufacture means or terminals of a plurality of merchandise suppliers; selects the most suitable merchandise supplier based on estimate conditions sent from the merchandise suppliers, which include merchandise price and delivery date; and instructs the selected most suitable merchandise supplier to supply the merchandise.

The invention according to claim 11 is the method of selling merchandise of any of the claims 1 to 10 that when selecting the most suitable merchandise: selects lenses and frames for the eyewear from a database based on the user data, which includes conditions of use and user preferences such as color and design of the eyewear, a database, which contains characteristics of the lenses and frames for the eyewear, and measurement results of eye examination data such as vision, and face data that uses 3-dimensional image technology, and combines them as the eyewear or merchandise; an'd sends a synthesized image of the user, wearing the eyewear using the face data and combined lenses and frames for the eyewear, to the merchandise-sales means via the network, and prompts the user to check the selection of the most suitable eyewear.

The invention according to claim 12 is the method of selling merchandise of any of the claims 1 to 11 that when giving instructions to supply the merchandise, selects a supplier of eyewear, which is the most suitable merchandise supplier from among a plurality of merchandise suppliers that were pre-registered on the network server based on the lens characteristics and eyewear characteristics included in data related to the most suitable eyewear selected by the user, and the user preference data, and gives an instruction to supply the eyewear.

The invention according to claim 13 is the method of selling merchandise of claim 7 in which the POS uses a technique of reading barcodes, including 2-dimensional and 3-dimensional barcodes, or a technique of reading symbols or characters, such as OCR.

The invention according to claim 14 is a method of purchasing merchandise in which the merchandise-sales-support means in the method of selling merchandise in any of the claims 1 to 13 receives bidding data for a desired merchandise sales price via a network, such as the Internet, from the terminal of a merchandise shop, and makes a merchandise sales contract to purchase merchandise from a merchandise seller, whose desired merchandise sales price is lower or less than a preset and confidential maximum allowable merchandise purchase price, or from a merchandise seller, whose desired merchandise sales price is the minimum desired sales price.

The invention according to claim 15 is the method of selling merchandise of any of the claims 1 to 13 where when merchandise sold to a pre-registered user has a set merchandise code that can be used to specify the merchandise on a normal sales network, and information of a second sales price is received from the user over a network, such as the Internet, of the merchandise on another pre-registered sales network that is lower than the first sales price at the time the merchandise was sold, the sales price charged to the user is changed from the first sales price to the second sales price.

The invention according to claim 16 is the method of selling merchandise of any of the claims 1 to 13, 15 where changing the sales price from the first sales price at the time the merchandise was sold to a second sales price according to information from the user is performed when the price is greater (higher) than a preset sales price.

The invention according to claim 17 is the method of selling merchandise of any of the claims 1 to 13, 15, 16 where changing the sales price from a first sales price at the time the merchandise was sold to a second sales price according to information from the user is performed within a preset period after merchandise is ordered.

The invention according to claim 18 is the method of selling merchandise of any of the claims 1 to 13, 15 to 17, in which the user is billed at the sales price that was changed from a first sales price at the time the merchandise was sold to a second sales price according to information from the user.

The invention according to claim 19 is the method of selling merchandise of any of the claims 1 to 13, 15 to 18, where, when payment for merchandise from a user is finished, a refund is processed for the user that is equal to the difference in the first price at time the merchandise was sold and second sales price according to information from the user.

The invention according to claim 20 is a memory means on which a program is recorded that is capable of executing the method of selling merchandise in any of the claims 1 to 13, 15 to 19.

### BRIEF EXPLANATION OF THE DRAWINGS

Fig. 1 is a drawing showing construction for executing the method of selling merchandise of a first embodiment of the invention.

Fig. 2 is a flowchart showing an example of the flow of the method of selling merchandise of the first embodiment of the invention.

Fig. 3 is a drawing showing construction for executing the method of selling merchandise of a second embodiment of the invention.

Fig. 4 is a drawing showing the construction of the eyewear-sales means in Fig. 3.

Fig. 5 is a drawing showing the construction of the merchandise-sales-support means in Fig. 3.

Fig. 6 is a flowchart showing an example of the operation of the merchandise-sales-support means in Fig. 3.

### DESCRIPTION OF THE PREFERRED EMBODIMENTS

The preferred embodiments of the invention will be explained below based on the drawings.

### (Embodiment 1)

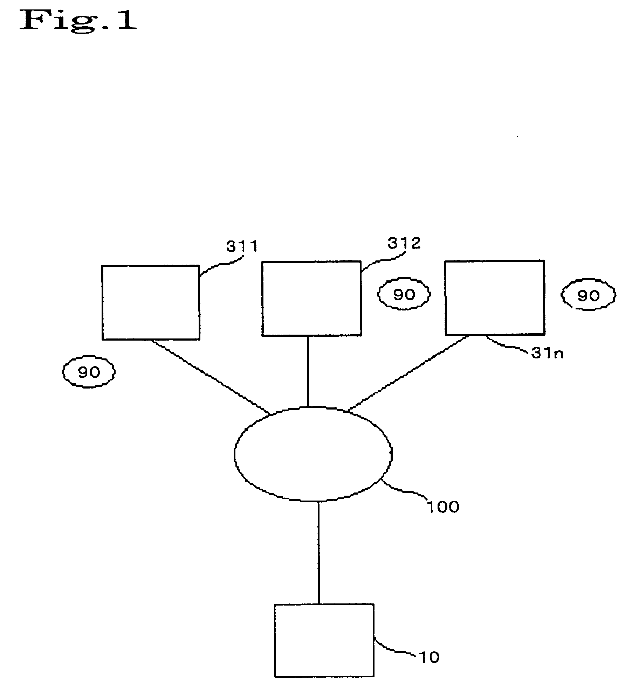

Fig. 1 is a drawing showing construction for executing the method of selling merchandise of a first embodiment of the invention.

As shown in Fig. 1, this construction for executing the method of selling merchandise of this first embodiment comprises: the Internet 100, a merchandise-sales-support means (eyewear-sales-support means) 10 that is managed by the eyewear seller (merchandise seller), and merchandise-purchasing-support means 311, 312, ..., 31n that are managed by the respective eyewear shops (merchandise shops).

The merchandise-sales-support means 10 receives bidding data via the Internet 100 from a merchandise-purchasing-support means 311 (hereafter, merchandise-purchasing-support means 311 will be used as a representative) used by a pre-registered eyewear shop for the price of merchandise desired to be purchased.

When the merchandise seller determines that the desired merchandise sales price received from the merchandise-purchasing-support means 311 is greater than the minimum allowable merchandise sales price that is preset in the merchandise-sales-support means 10, a merchandise sales contract is made with the eyewear shop.

Also, in the case of bidding having a time limit within a specified period, the number of times a desired merchandise sales price from the same eyewear shop can be received can be limited, for example, limited to a maximum of two times a month.

Furthermore, the maximum or minimum amount of purchased merchandise corresponding to the desired merchandise sales price can also be included in the bid. In this case, the merchandise-sales-support means 10 receives this bidding data, and can make a contract with the merchandise shop with these conditions as incidental conditions.

In the case that the purchase period is set in the merchandise sales contract as an incidental condition, the merchandise seller lends a POS (not shown in the figure), which reads two-dimensional barcodes, to the eyewear shop.

At the eyewear shop, the inventory of the merchandise is managed during the contract purchase period using this POS. During this purchase period, merchandise inventory data that are stored by the merchandise-purchasing-support means 311 is sent to the merchandise-sales-support means 10.

At the merchandise seller, the merchandise-sales-support means 10 receives the merchandise inventory data that are stored by the merchandise-purchasing-support means 311 via the Internet, so it is possible to manage the inventory of that merchandise during the purchase period contracted with the eyewear shop.

Management of the merchandise inventory by the merchandise seller during the purchase period includes the service of automatically sending merchandise and restocking the inventory when fast selling merchandise at the eyewear shop drops below a preset inventory level.

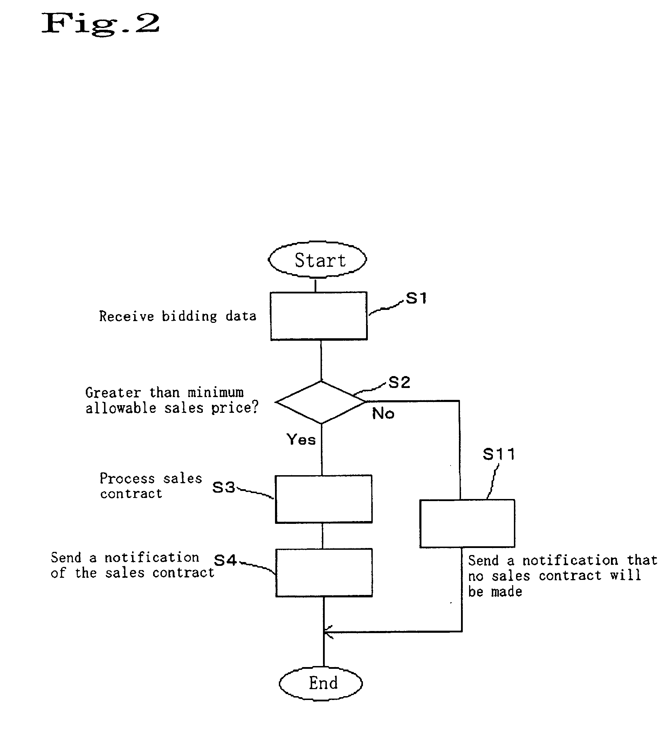

Fig. 2 is a flowchart showing an example of the flow of the method of selling merchandise of this embodiment.

The merchandise-sales-support means 10 receives bidding data for the desired merchandise price, via the Internet 100, from the merchandise-purchasing-support means 311 used at the pre-registered eyewear shop (step S1).

The merchandise-sales-support means 10 determines whether or not the received desired merchandise purchase price is greater than the preset minimum allowable merchandise sales price (step S2).

In step S2, when the desired merchandise purchase price is greater than the minimum allowable merchandise sales price (Yes in the figure), processing is performed for making a sales contract for that merchandise with that eyewear shop (step S3). This process is performed for all of the received bidding data that are greater than minimum allowable merchandise sales price.

Notification data notifying that a sales contract has been made is sent from the merchandise-sales-support means 10 to the merchandise-purchasing-support means 311 (step S4).

In step S2, when the desired merchandise purchase price is less than the minimum allowable merchandise sales price (No in the figure), a notification is sent from the merchandise-sales-support means 10 to the merchandise-purchasing-support means 311 at the eyewear shop that a sales contract will not be made (step S11).

In the steps shown in Fig. 2, when determining whether or not the price is greater than the minimum allowable merchandise sales price, it is possible to divide the eyewear shops (merchandise shops) into groups beforehand, and to set minimum allowable merchandise sales prices for each of the groups.

A detailed example of dividing the shops into groups will be explained. The users (merchandise shops) of this bidding system are divided into four types (they can be divided even further). A minimum allowable merchandise sales price is set for each of the respective four groups.

The first group comprises mainly retail stores or franchises (FC) such as a company or individual that pays an initial charge and deposit. After companies or individuals that have paid an initial charge and deposit have been found, it is also possible to include other merchandise shops in this group if approved separately by the merchandise seller. The merchandise shops that belong to this group are-trusted for their business transactions so the minimum allowable merchandise sales price can be set low.

The second group comprises companies or individuals that only pay an initial fee. A shop is classified into this group when approved by the merchandise seller after providing company data or individual data and paying an initial fee. Since no deposit is paid, the minimum allowable merchandise sales price is set higher than that of group 1.

The third group comprises companies or individuals that can provide a guarantee of self. Since no initial fee or deposit is paid, the minimum allowable merchandise sales price is set based on business trust and is higher than that of group 2.

The fourth group comprises general companies or individuals. These are normal companies and individuals. Since no data related to credit is provided, the minimum allowable sales price is set higher than that of group 3.

Furthermore, by adding corrections to the minimum allowable merchandise sales price automatically or during a specified period, based on factors that affect the price, such as seasonal changes, merchandise shipping destination (country, region), number of orders, seasonal changes, currency exchange rate (foreign products, imported products), delivery date, etc., for each of the merchandise sellers registered in the four divided groups, it is possible to apply the system to foreign merchandise shops. Also, it is possible to make public the minimum allowable merchandise sales price in advance based on supply and demand for the merchandise and pricing.

Also, the bidding system of the method for selling merchandise of this first embodiment is a system for selling merchandise, however, by replacing the merchandise seller with the merchandise buyer and using the merchandise-sales-support means 10, this embodiment could also be a bidding system for purchasing. For example, in this bidding system, coupons are handled as merchandise, and the merchandise buyer works to purchase the merchandise at as low of a price as possible. That is, by performing the function of both the merchandise seller and merchandise buyer, the merchandise-sales-support means 10 can be used to sell merchandise at as high a price as possible, or to purchase merchandise as cheaply as possible.

To be more precise, the merchandise-sales-support means 10 operated by the merchandise buyer receives bidding data of the desired merchandise sales price from the terminal operated by the merchandise seller via a network such as the Internet 100, and makes a merchandise sales contract to purchase merchandise from a merchandise seller, whose desired merchandise sales price is lower or less than a preset and confidential maximum allowable merchandise purchase price, or from a merchandise seller, whose desired merchandise sales price is the minimum desired sales price.

The merchandise, which is the target of the bidding, is not limited to eyeglasses and contact lenses, but can be any marketable merchandise or service that can be bid on.

The method of selling merchandise of this first embodiment is constructed as described above and has the following effects.

By receiving bidding data related to a desired merchandise purchase price and sales-support service from a plurality of pre-registered eyewear shops via the Internet 100, it is possible to more efficiently provide support services and set sales prices for each of the eyewear shops of various sizes, while at the same time maintaining profit for both seller and buyer. Also, by not making the bidding prices public, it is possible to prevent a price collapse of the merchandise, and thus it becomes possible to set one-time-only discounts.

### (Embodiment 2)

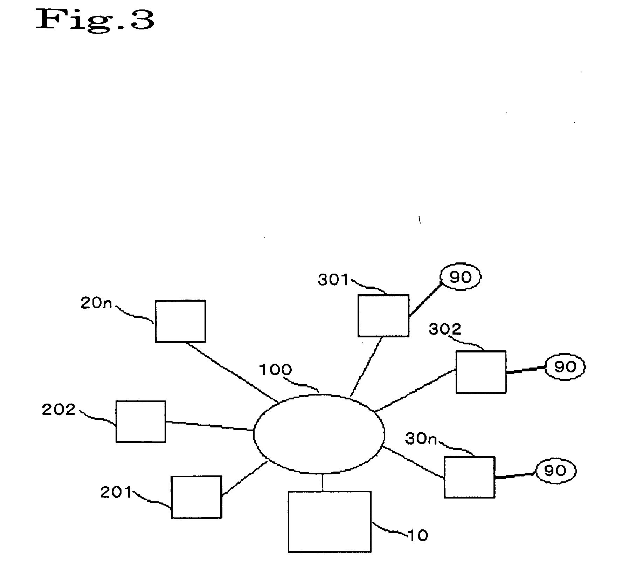

Fig. 3 is a drawing showing construction for executing the method of selling merchandise of a second embodiment.

As shown in Fig. 3, the construction for executing the method of selling merchandise of this second embodiment comprises: the Internet 100, a merchandise-sales-support means 10 that is managed by an eyewear seller (merchandise seller), merchandise-manufacture means (eyewear-manufacture means) 201, 202, ..., 20n that are managed by respective eyewear manufacturers (merchandise manufacturers), and merchandise-sales means (eyewear-sales means) 301, 302, ..., 30n that are managed by respective eyewear shops (merchandise shops).

The merchandise-sales-support means 10 receives data from the eyewear-sales means 301 (hereafter, eyewear-sales means 301 will be used as a representative) via the internet 100 related to the user 90 such as measurement results, which include eye-examination data such as vision of the user 90, and face data that uses 3-dimensional image technology, and conditions of use such as how the eyewear will be used.

Also, the merchandise-sales support means 10 selects data related to the most suitable eyewear (merchandise) for the user based on the data related to the user 90, and sends that data via the Internet 100 to the eyewear-manufacture means 201 (hereafter, eyewear-manufacture means 201 will be used as a representative), and gives an instruction to manufacture the eyewear. It can also give instructions of where to deliver the eyewear.

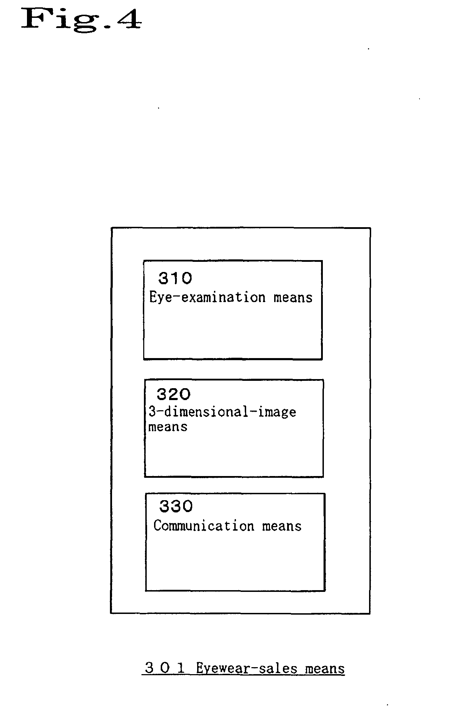

Fig. 4 is a drawing showing the construction of the eyewear-sales means 301 in Fig. 3.

The eyewear-sales means 301 comprises: an eye-examination means 310 for the user 90, a 3-dimensional-image means 320, and an interactive type communication means 330 for asking questions such as the conditions for use.

The communication means 330 can add to and update the contents of the questions stored in its database. For example, in addition to receiving selections corresponding to questions, it receives input such as questions from the user 90, and gives answers to the-questions and advice to the user 90. The communication means 330 is used for adding these questions, answers and advice and updating the contents of the questions.

The eyewear-sales means 301 sends data to the merchandise-sales-support means 10 via the Internet 100 related to the user 90, which includes eye-examination data such as the vision of the user 90 from the eye-examination means 310, face data from the 3-dimensional-image means 320 and conditions of use such as how the eyewear will be used from the communication means 330.

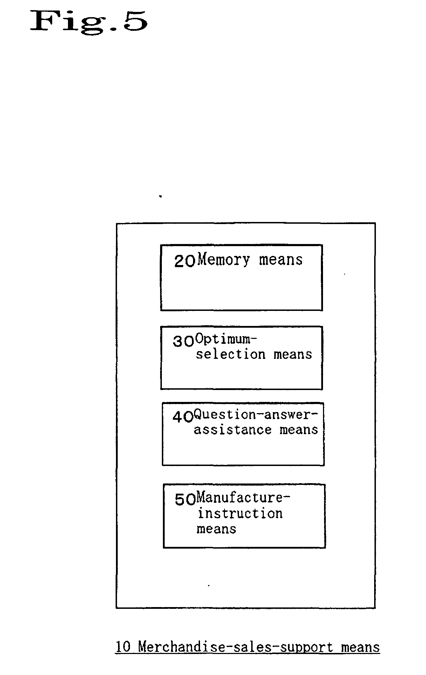

Fig. 5 is a drawing showing the construction of the merchandise-sales-support means 10 in Fig. 3.

The merchandise-sales-support means 10 comprises: a memory means 20, optimum-selection means 30, question-answer-assistance means 40, and manufacture-instruction means 50.

The memory means 20 stores a database related to eyewear lenses and frames, and a database related to the contents of the questions stored by the communication means 330 shown in Fig. 4.

The optimum-selection means 30 selects candidates for the most suitable eyewear from the database related to the eyewear registered in the memory means 20, based on face data and preferences of the user 90, such as color and design of the eyewear, that are included in the received data related to the user 90.

Also, the optimum-selection means 30 combines the face data with the selected eyewear and displays a synthesized image of the eyewear being worn by the user and prompts the user 90 to select the most suitable eyewear.

The method of selection is performed based on measurement results containing eye-examination data such as vision, conditions of use such as how the eyewear will be used, lens characteristics, and characteristics of the eyewear frames, and is narrowed down by conditions such as lens conditions such as material, specific weight, thickness, for example, lightweight plastic or hard, thick glass, and frame conditions such as material and specific gravity, for example, lightweight, anti-corrosive, and the like.

When the question-answer-assistance means 40 receives data related to the user 90, including questions from the user 90 that are entered by the communication means 330, that data is used for adding to or updating the database related to the question contents stored by the communication means 330 in the memory means 20. Also, when the technician operating the question-answer-assistance means 40 is capable of answering the questions, the answers and advice are sent in realtime to the communication means 330 and the user 90 is notified.

The manufacture-instruction means 50 sends the data related to the most suitable eyewear received from the merchandise-sales-support means 10 to the eyewear-manufacture means 201 (hereafter used as a representative eyewear-manufacture means) via the Internet 100, and instructs that the eyewear be manufactured.

Moreover, based on the preferences of the user 90 such as lens characteristics, eyewear frame characteristics, color, material, design and the like that are contained in the data related to the most suitable eyewear and that are selected by the user 90, the manufacture-instruction means 50 selects the most suitable manufacturer from among the eyewear manufacturers that manage the eyewear-manufacture means 201, 202, ..., 20n that are pre-registered on the server of the Internet 100, and instructs that the eyewear be manufactured.

Furthermore, the manufacture-instruction means 50 can send data related to the most suitable eyewear and an estimate request to a plurality of pre-registered eyewear manufacturers, and select the most suitable eyewear manufacturer based on estimate conditions that include the product cost and delivery date that are sent from the eyewear manufacturer, and then instruct the selected most suitable eyewear manufacturer to manufacture the eyewear.

Also, it is possible for the manufacture-instruction means 50 to send an instruction to the eyewear manufacturer to deliver the manufactured eyewear to a specified location such as a specified place or specified person.

Next, another example of using the merchandise-sales-support means 10 shown in Fig. 3 will be explained.

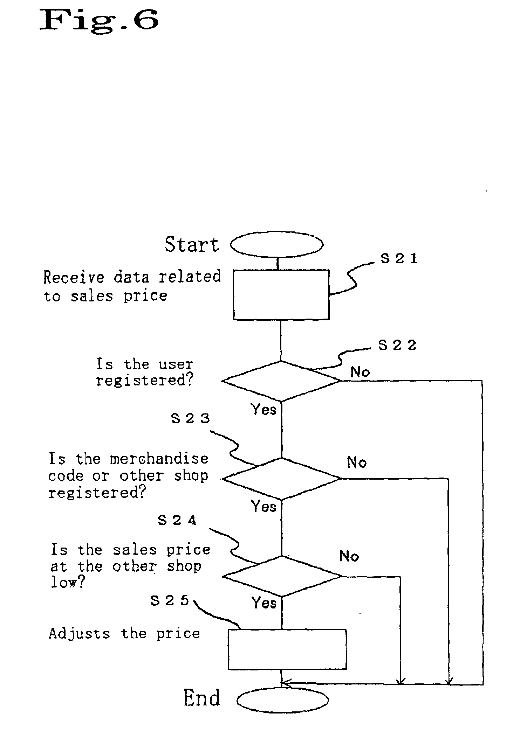

Fig. 6 is a flowchart showing an example of the operation of the merchandise-sales-support means 10 shown in Fig. 3.

In the case that merchandise code, which can specify merchandise on a normal sales network, is set for the merchandise sold to a pre-registered user 90, and sales price information is received from the user 90 of a second sales price on another pre-registered normal sales network that is lower than the first sales price at the time the merchandise was ordered, the sales price charged to the user 90 is changed from the first sales price to the second sales price.

The merchandise-sales-support means 10 receives information related to the merchandise code and sales price of the merchandise in question at another shop via the Internet 100 from the user that purchased the merchandise (step S21).

The merchandise-sales-support means 10 then determines whether or not the sender of the data is a registered user 90 (step S22).

In step S22 when the sender is a registered user 90 (Yes in the figure), the merchandise-sales-support means 10 determines whether or not the received merchandise code and other shop are registered (step S23).

In step S23, when the merchandise code and other shop are registered (Yes in the figure), the merchandise-sales support means 10 determines whether the sales price at the other shop (second sales price) is lower then the sales price given to the user 90 (first sales price) (step S24).

In step S24, when the sales price at the other shop is lower (Yes in the figure), price adjustment is performed to replace the price given to the user 90 with the sales price at the other shop (step S25).

In step S24, when the sales price at the other shop is not lower (No in the figure), processing ends.

In step S23, when either the received merchandise code or other sales shop is not registered (No in the figure), processing ends.

In step S22, when the user 90 is not registered (No in the figure), processing ends.

Also, changing the price from the first sales price to the second sales price is performed when the sales price is greater than (higher than) a preset sales price.

An invoice is sent to the user 90 according to the changed sales price.

Furthermore, changing the price from the first sales price to the second sales price is performed within a preset period after the merchandise is ordered.

In the case that the user 90 has finished paying for the merchandise, it is possible to process a discount for the user 90 equal to the difference in the first sales price and second sales price.

When a merchandise code is set for the merchandise that was sold to a pre-registered user 90 that makes it possible to specify the merchandise on a normal sales network, and information is received over a network, such as the Internet 100, from the user 90 that a second sales price for merchandise on another pre-registered normal sales network is lower than a first sales price at the time merchandise was ordered, the sales price is changed from the first sales price given to the user 90 to the second sales price.

Also, changing the price from the first sales price to the second sales price is performed when the sales price is greater than (higher than) a preset sales price.

Furthermore, changing the price from the first sales price to the second sales price is performed within a preset period after the merchandise is ordered.

In the case that the user 90 has finished paying for the merchandise, it is possible to process a discount for the user 90 equal to the difference in the first sales price and second sales price.

This second embodiment of a method for selling merchandise is constructed as described above, so it has the following effects in addition to the effects of the first embodiment.

By giving answers to questions from the user 90 and providing advise after receiving data related to the user 90, which includes eye-examination data such as the vision of the user 90, face data, and conditions of use such as how the eyewear will be used, it is possible for the user 90 to satisfactorily select the most suitable eyewear.

By selecting the most suitable eyewear manufacturer from among pre-registered eyewear manufacturers, sending data related to the selected eyewear via the Internet 100 and giving instructions (request) to manufacture the eyewear, it is possible to ask an eyewear manufacturer, which was determined to be the most suitable according to their record, to manufacture the eyewear. It is also possible to do away with space for manufacturing.

Also, by sending an estimate request, it is possible to provide the most suitable eyewear from the aspect of delivery date and cost to the user 90.

The merchandise that is the object of the merchandise-sales means 301 of the method of selling merchandise of this embodiment is not limited to eyewear, and the embodiment can be applied as well to other accessories such as clothing, hats, shoes, rings and the like. There is no need for an in-shop specialist or technician at the sales location where the merchandise-sales means 301 is set up, so use at stores such as convenience stores is also possible.

It is also evident that a technique of reading barcodes, including QR code, Vericode, 3-dimensional code, or a technique of reading symbols or characters such as OCR can be applied instead of the 2-dimensional barcode used in this embodiment.

Moreover, the invention is not limited to this embodiment, and can be applied to suitable technology related to this method of selling and merchandise and method of purchasing merchandise.

Furthermore, the number, location and shape of the above components are not limited by this embodiment, and any number, location or shape that is suitable to the invention is possible. In the drawings, the same code numbers are used for identical elements.

### Industrial Applicability

The invention constructed as described above has the following effects.

By receiving bidding data from a plurality of pre-registered merchandise shops via the Internet related to a desired merchandise purchase price and sales-support services, it is possible to efficiently provide support service and set sales prices for each of the merchandise shops of various sizes, while at the same time maintain profit for both seller and buyer.

Since prices, such as the desired merchandise purchase price or the minimum allowed merchandise sales price, are not made public, and since a minimum merchandise sales price is set, it is possible to reduce the time required for price negotiations in business transactions. Moreover, with purchase bidding, opportunities for purchasing merchandise cheaply increase.

By giving answers to questions from the user and providing advise after receiving data related to the user, which includes eye-examination data such as the vision of the user, face data, and conditions of use such as how the eyewear will be used, it is possible for the user to satisfactorily select the most suitable eyewear.

Also, by using the Internet, it is possible to select an eyewear manufacturer from among a plurality of eyewear manufacturers that is the most suitable from the aspect of technology, cost and delivery date.

By using POS that utilizes barcode technology, which includes 2-dimensional barcodes, at each of a plurality of shops, it is possible to perform detailed management of inventory merchandise. Also, by monitoring the merchandise inventory data of each shop via the Internet, it is possible to prevent the inventory from running out at each of the shops.

By receiving a request to correct the sales price of merchandise already purchased and adjusting the sales price when a user finds that the merchandise is being sold more cheaply at another pre-registered shop, it is possible to prevent losing users.

Since discounts are adjusted when the sale price is greater than (higher than) a preset sales price, it is possible to stop the sales price from becoming too low.

By adjusting the sales price within a preset period after merchandise has been ordered, it is possible to limit the period for receiving price adjustments.

In the case that the merchandise has already been paid for, it is possible to adjust the price by refunding money to the user equal to the difference between the first sales price and second sales price.

## Claims

1. A method of selling merchandise using bidding and comprising:
a first step wherein a merchandise-sales-support means, which is operated by a merchandise seller who performs distribution, receives bidding data via a network, such as the Internet, from a merchandise-purchasing-support means, which is operated by a pre-registered merchandise shop, for a desired merchandise purchase price; and
a second step of making a merchandise sales contract with a merchandise shop when said desired merchandise purchase price is greater than a preset and confidential minimum allowable merchandise sales price.

2. The method of selling merchandise of claim 1 wherein said second step comprises a step of determining whether or not said desired merchandise purchase prices from said merchandise shops, which are pre-registered for a plurality of groups, are greater than said minimum allowable merchandise sales price, which is preset for each group; and making said merchandise sales contract with said merchandise shop, which sent said desired merchandise purchase price that is greater than said minimum allowable merchandise sales price.

3. The method of selling merchandise of claim 1 or 2 wherein said second step comprises a step of setting in advance said minimum allowable merchandise sales price for each of said merchandise shops, which are registered in said respective groups, based on factors that affect the price setting, such as seasonal changes, merchandise shipping destination that corresponds to said merchandise shop, number of orders, currency exchange rate, delivery date, etc.

4. The method of selling merchandise of any of the claims 1 to 3 wherein said first step comprises a third step of limiting the number of times a desired merchandise purchase price can be received from the same merchandise shop as said bidding data that has a deadline after a specified period of time.

5. The method of selling merchandise of any of the claims 1 to 4 wherein said second step comprises a step of making public in advance said confidential minimum allowable merchandise sales price according to said factors that affect price setting and conditions of supply and demand.

6. The method of selling merchandise of any of the claims 1 to 5 wherein said first step comprises a step of receiving a maximum amount or minimum amount of merchandise for said desired merchandise purchase price.

7. The method of selling merchandise of any of the claims 1 to 6 wherein said merchandise-sales-support means monitors which merchandise is selling well by: lending a POS, which uses 2-dimensional barcodes, to a merchandise shop with which said merchandise sales contract has been made, or general merchandise shop, receiving merchandise inventory data from said merchandise shop that uses that POS, and managing the merchandise inventory at said merchandise shop.

8. The method of selling merchandise of any of the claims 1 to 7 wherein said merchandise-sales-support means
receives data related to the user, which includes measurement results such as vision or body type and conditions of use such as how the merchandise will be used by the user, via a network, such as the Internet, from the merchandise-sales means installed at said merchandise shop with which said merchandise sales contract has been made, or general merchandise shop;
selects the most suitable merchandise based on said user data from a database related to registered merchandise;
selects the most suitable merchandise supplier from among merchandise suppliers, including pre-registered merchandise manufacturers; and
sends said most suitable merchandise data from said merchandise-sales-support means to said merchandise-manufacturing means or terminal of said selected merchandise supplier over said network, and gives instructions to supply said merchandise.

9. The method of selling merchandise of any of the claims 1 to 8 that receives questions related to said merchandise from said user when said merchandise-sales-support means receives said user data, and sends answers to said questions and advice to said user over said network.

10. The method of selling merchandise of any of the claims 1 to 9 that, when giving an instruction to supply said merchandise: sends data, which is related to said merchandise, and an estimate request to said merchandise-manufacture means or terminals of a plurality of merchandise suppliers; selects the most suitable merchandise supplier based on estimate conditions sent from said merchandise suppliers, which include merchandise price and delivery date; and instructs the selected most suitable merchandise supplier to supply said merchandise.

11. The method of selling merchandise of any of the claims 1 to 10 that, when selecting the most suitable merchandise:
selects lenses and frames for the eyewear from a database based on said user data, which includes conditions of use and user preferences such as color and design of the eyewear, a database, which contains characteristics of the lenses and frames for the eyewear, and measurement results of eye examination data such as vision, and face data that uses 3-dimensional image technology, and combines them as the eyewear or merchandise; and
sends a synthesized image of said user, wearing the eyewear using the face data and combined lenses and frames for the eyewear, to said merchandise-sales means via said network, and prompts said user to check the selection of the most suitable eyewear.

12. The method of selling merchandise of any of the claims 1 to 11 that, when giving instructions to supply said merchandise: selects a supplier of eyewear, which is the most suitable merchandise supplier from among a plurality of merchandise suppliers that were pre-registered on said network server based on the lens characteristics and eyewear characteristics included in data related to the most suitable eyewear selected by said user, and said user preference data; and gives an instruction to supply said eyewear.

13. The method of selling merchandise of claim 7 wherein said POS uses a technique of reading barcodes, including 2-dimensional and 3-dimensional barcodes, or a technique of reading symbols or characters, such as OCR.

14. A method of purchasing merchandise wherein the merchandise-sales-support means in the method of selling merchandise in any of the claims 1 to 13 receives bidding data for a desired merchandise sales price via a network, such as the Internet, from the terminal of a merchandise shop, and
makes a merchandise sales contract to purchase merchandise from a merchandise seller, whose said desired merchandise sales price is lower or less than a preset and confidential maximum allowable merchandise purchase price, or from a merchandise seller, whose desired merchandise sales price is the minimum desired sales price.

15. The method of selling merchandise of any of the claims 1 to 13 where, when merchandise sold to a pre-registered user has a set merchandise code that can be used to specify said merchandise on a normal sales network, and information of a second sales price is received from said user over a network such as the Internet of said merchandise on another pre-registered sales network that is lower than the first sales price at the time the merchandise was sold, the sales price charged to said user is changed from said first sales price to said second sales price.

16. The method of selling merchandise of any of the claims 1 to 13, 15 where changing the sales price from the first sales price at the time the merchandise was sold to a second sales price according to information from said user is performed when the price is greater (higher) than a preset sales price.

17. The method of selling merchandise of any of the claims 1 to 13, 15, 16 where changing the sales price from a first sales price at the time the merchandise was sold to a second sales price according to information from said user is performed within a preset period after merchandise is ordered.

18. The method of selling merchandise of any of the claims 1 to 13, 15 to 17, wherein the user is billed at the sales price that was changed from a first sales price at the time the merchandise was sold to a second sales price according to information from said user.

19. The method of selling merchandise of any of the claims 1 to 13, 15 to 18, where when payment for merchandise from a user is finished, a refund is processed for said user that is equal to the difference in the first price at time the merchandise was sold and second sales price according to information from said user.

20. A memory means on which a program is recorded that is capable of executing the method of selling merchandise in any of the claims 1 to 13, 15 to 19.
